## Europäisches Patentamt
## European Patent Office
## Office européen des brevets

(11) Numéro de publication: **0 019 527**
B1

(12) **FASCICULE DE BREVET EUROPEEN**

(45) Date de publication du fascicule du brevet: **02.11.83**

(51) Int. Cl.³: **G 01 N 17/00, G 01 N 27/12**

(21) Numéro de dépôt: **80400634.4**

(22) Date de dépôt: **09.05.80**

(54) **Dispositif de déclenchement d'alarme associe à une conduite dans laquelle circule un fluide entraînant avec lui des particules solides.**

(30) Priorité: **11.05.79 FR 7912063**

(43) Date de publication de la demande:
**26.11.80 Bulletin 80/24**

(45) Mention de la délivrance du brevet:
**02.11.83 Bulletin 83/44**

(84) Etats contractants désignés:
**AT BE CH DE GB IT LI LU NL SE**

(56) Documents cités:
**DE - A - 1 798 414**
**FR - A - 2 316 594**
**FR - A - 2 382 689**
**GB - A - 447 813**
**US - A - 3 015 950**
**US - A - 3 714 562**

**Paper Number SPE 4555 présenté lors d'un congrés (48th Annual Fall Meeting of the Society of Petroleum Engineers of AIME) ayant eu lieu à Las Vegas au Nevada du 30 septembre au 3 octobre 1973**

(73) Titulaire: **GAZ DE FRANCE**
**23, rue Philibert Delorme**
**F-75017 Paris (FR)**

(72) Inventeur: **Cheron, Jean-Jacques Paul Marcel**
**29 Allée Emile Zola**
**F-93320 Pavillon Sous/ Bois (FR)**
Inventeur: **Waroux, Denis Maurice**
**15, rue Roger Renard**
**F-95270 Saint Martin du Tertre (FR)**

(74) Mandataire: **Weinstein, Zinovi et al,**
**Cabinet Z. WEINSTEIN 20, Avenue de Friedland**
**F-75008 Paris (FR)**

EP 0 019 527 B1

Courier Press, Leamington Spa, England.

Dispositif de déclenchement d'alarme associé à une conduite dans laquelle
circule un fluide entraînant avec lui des particules solides.

La présente invention se rapporte d'une manière générale aux dispositifs de déclenchement d'alarme associés à une conduite dans laquelle circule un fluide entraînant avec lui des particules solides, et notamment du sable entraîné par du gaz naturel extrait d'un réservoir souterrain. Plus particulièrement, l'invention concerne une nouvelle sonde à seuil d'érosion qui plonge dans la conduite de gaz et qui est associée à un circuit électronique de traitement approprié.

L'extraction du gaz naturel d'un réservoir souterrain, notamment créé dans une formation aquifère de sable, et dans lequel le gaz est stocké momentanément, a toujours posé le problème de l'élimination des particules qui sont entraînées par le gaz et qui remontent à la surface en même temps que lui. Ces particules sont de différentes natures. On distingue par exemple des gouttelettes d'eau ou de boue et également du sable. L'eau et la boue ne sont généralement pas gênantes, mais le sable peut être redoutable pour les installations. C'est pourquoi, afin d'arrêter le sable, on a équipé la partie inférieure de la colonne de remontée du puits d'extraction d'une crépine. Cependant, cette dernière peut se détériorer pendant la période d'utilisation, ce qui se traduit par une augmentation de la proportion de sable entraîné. A cet effet, divers systèmes permettant de détecter le sable entraîné dans une canalisation de gaz ontété mis au point.

Cependant, la plupart du temps, l'exploitant est beaucoup plus intéressé par la connaissance d'un seuil de production de sable que par le débit exact du sable dans le puits d'extraction. A la limite, ce n'est pas tellement le sable qui est gênant, mais son "pouvoir érodant". On connaît, notamment par la conférence (paper number SPE 4555) présentée lors d'un congrès (48th Annual Fall Meeting of the Society of Petroleum Engineers of AIME) ayant eu lieu a Las Vegas au Nevada du 30 septembre au 3 octobre 1973 et qui a été publié dans la revue American INSTITUTE OF MINING, METAL-LURGICAL, AND PETROLEUM ENGINEERS, INC, un dispositif Exxon utilisant une sonde creuse (qui plonge dans la conduite de gaz) qui joue le rôle d'alarme lorsque l'érosion d'une paroi témoin est telle que cette paroi est perforée au moins en un point. Cette sonde est constituée par un tube mince rempli d'un liquide sous pression, relié à un manomètre à contact de seuil d'alarme. Lorsque la paroi du tube, en acier, en bronze ou autre est perforée, et si la pression du liquide contenu dans le tube est supérieure à celle du gaz dans la conduite, le liquide s'écoule dans la conduite et le manomètre à seuil se déclenche. De même, lors de la perforation de la paroi du tube, et si la pression du gaz dans la conduite est supérieure à celle du liquide contenu dans le tube, le gaz pénètre dans le tube et déclenche le manomètre à seuil. Un tel dispositif présente cependant des inconvénients. En effet, la stabilité pendant une longue période de temps de la pression du liquide contenu dans le tube est relativement difficile à assurer. En outre, si le gaz pénètre dans le tube, il peut provoquer un arrachement du manomètre, ce qui se traduit par une fuite de gaz.

La présente invention a pour but notamment de remédier aux inconvénients indiqués en proposant une nouvelle sonde qui va jouer le rôle d'alarme lorsque l'érosion d'une paroi témoin va être telle que cette paroi est perforée au moins en un point.

A cet effet, l'invention a pour objet un dispositif de déclenchement d'alarme associé à une conduite dans laquelle circule un fluide, tel que par exemple du gaz naturel, entraînant avec lui des particules solides comme par exemple du sable, ainsi que de l'eau sous forme de gouttelettes ou de la boue, du type comprenant une sonde plongeant à l'intérieur de ladite conduite et done une paroi est soumise à l'action érosive des particules solides, des moyens de détection d'une perforation de ladite paroi, des moyens de déclenchement d'alarme qui sont activés par lesdits moyens de détection si ladite perforation dépasse un degré prédéterminé, caractérisé en ce que ladite sonde est un barreau réalisé dans un matériau conducteur de l'électricité et recouvert uniformément d'au moins une couche isolante formant ladite paroi, et en ce que ledit moyen de détection comprend un circuit électronique de traitement ayant une branche connectée entre ledit barreau et la masse de ladite conduite, ladite branche comportant un générateur de tension et un circuit de mesure de courant.

Suivant un mode de réalisation de l'invention, le matériau formant le barreau est en métal recouvert d'une couche électriquement isolante et dure; ce peut être avantageusement un alliage d'aluminium recouvert d'une couche isolante d'alumine; ce peut être également un acier recouvert par exemple par schoopage d'un revêtement isolant.

Selon un autre mode de réalisation, le circuit de mesure de courant précité comporte une résistance connectée entre le barreau et le générateur de tension, et un amplificateur différenteil dont les deux entrées sont connectées respectivement aux deux bornes de la résistance. De plus, un circuit comparateur de tension est connecté à la sortie de l'amplificateur différentiel et des moyens de déclenchement d'alarme sont connectés à la sortie du circuit comparateur de tension.

Ainsi, le dispositif de déclenchement d'alarme décrit ci-dessus utilise une sonde recouverte avantageusement d'alumine dont la dureté est très voisine de celle du diamant, ce qui permet une durée de vie convenable et tombe dans la gamme intéressant l'exploitant en matière de seuil d'alarme. De plus, la sonde est associée à un circuit électronique de traitement très simple.

Les caractéristiques et avantages de l'invention apparaîtront mieux dans la description détaillée qui suit et se réfère aux dessins annexés, donnés uniquement à titre d'exemple et dans lesquels:

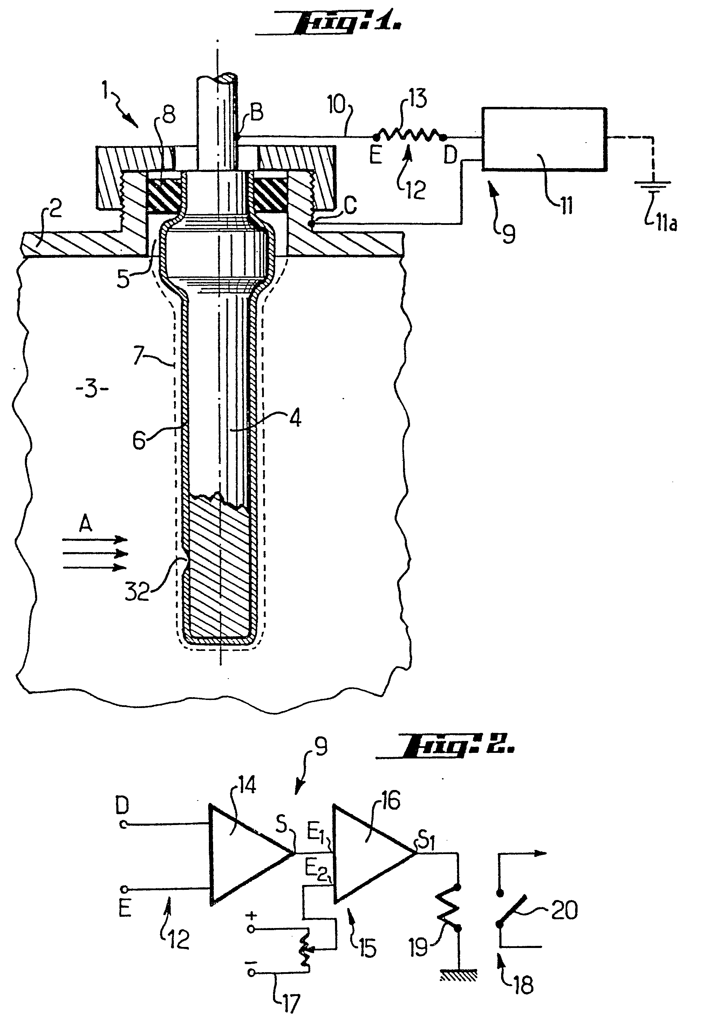

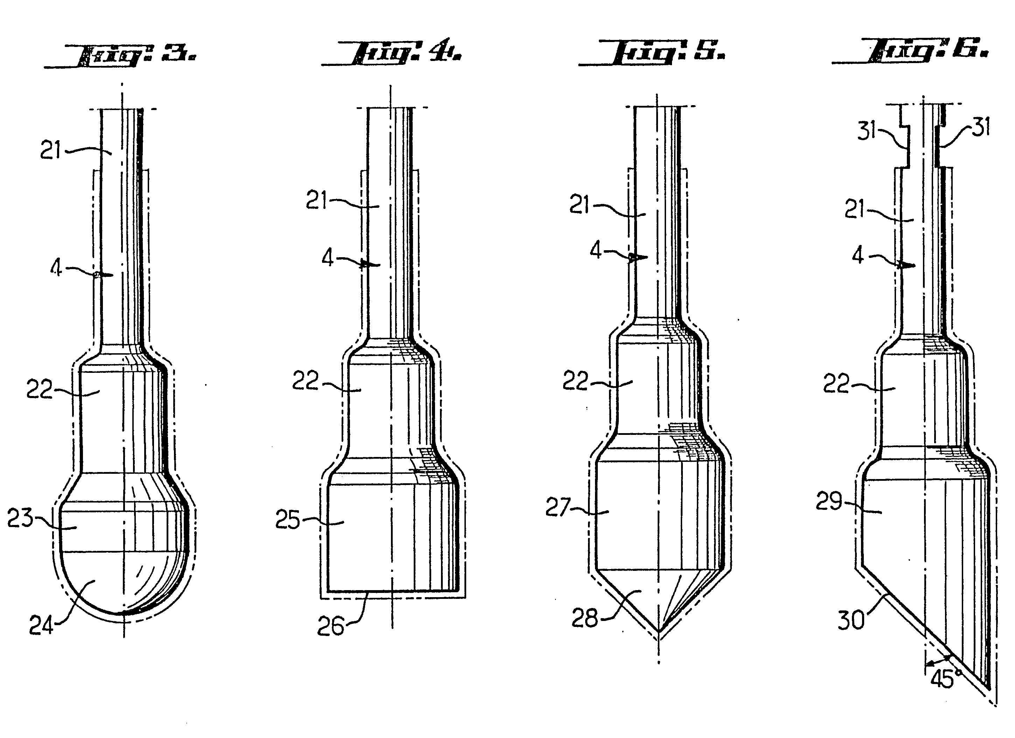

La figure 1 est une vue schématique en coupe longitudinale partielle avec arrachement de la sonde montée dans une canalisation, avec un schéma d'une partie du circuit électronique de traitement; la figure 2 est un schéma de l'autre partie du circuit électronique de traitement; et les figures 3 à 6 représentent différentes formes de sonde.

Suivant un exemple de réalisation, et en se reportant aux figures 1 et 2, un dispositif de déclenchement d'alarme 1 conforme à l'invention est associé à une conduite 2 dans laquelle circule un fluide 3, tel que par exemple du gaz naturel, entraînant avec lui des particules solides, comme par exemple du sable. On a matérialisé par les flèches A sur la figure 1, l'écoulement du sable et de l'eau dans le gaz.

Le dispositif de déclenchement d'alarme 1 comprend une sonde 4 qui est un barreau plein, cylindrique, réalisé dans un matériau conducteur de l'électricité, dont la partie inférieure pénètre transversalement dans la conduite 2 par une ouverture 5 de celle-ci. Le barreau 4 est en alliage d'aluminium et il est recouvert uniformément d'une couche isolante étanche 6 relativement épaisse et constituée par de l'alumine. Cette couche d'alumine 6 est formée soit par anodisation de l'aluminium, soit par un procédé connu dans la technique sous le nom de schoopage. De plus, la couche d'alumine 6 est rodée pour avoir un bon état de surface. Cette dernière doit être continue et non poreuse. L'épaisseur de cette couche 6 est, à l'état initial, d'environ 50 à 100$\mu$. D'autre part, on a matérialisé par les pointillés 7 l'eau qui ruisselle sur la sonde 4. Enfin, on a représenté en 8 un joint en caoutchouc monté sur la sonde 4 et résistant aux fortes pressions.

On notera ici que la sonde 4 décrite ci-dessus peut sans difficulté s'adapter au dispositif décrit dans le brevet français accordé à la demanderesse le 11 Décembre 1978 sous le n° 2.316.594, concernant: "Dispositif de détection de particules dans un fluide en circulation dans une conduite".

Le dispositif de déclenchement d'alarme 1 comprend également un circuit électronique de traitement 9 ayant une branche 10 connectée entre le barreau 4 et la masse de la conduite 2, les lettres B et C représentant ces deux connexions. Cette branche 10 comporte un générateur de tension 11 et un circuit de mesure de courant 12, une borne du générateur de tension 11 et la masse de la conduite 2 étant toutes deux de préférences reliées à la terre

11a, bien que cette condition ne soit pas indispensable.

Le circuit de mesure de courant 12 comprend une résistance 13 (figure 1) connectée entre le barreau 4 et le générateur de tension 11, et un amplificateur différentiel 14 (figure 2) dont les deux bornes d'entrée D et E sont connectées respectivement aux deux bornes D et E de la résistance 13.

Sur la figure 2, un circuit comparateur de tension 15 est connecté à la borne de sortie S de l'amplificateur différentiel à entrées flottantes 14. Plus précisément, ce circuit 15 est constitué par un amplificateur comparateur à seuil 16 dont l'une des bornes d'entrée $E_1$ est reliée à la borne de sortie S de l'amplificateur différentiel 14 et dont l'autre borne d'entrée $E_2$ est reliée à une source de tension variable de référence du seuil 17. A la sortie $S_1$ de l'amplificateur comparateur 16 sont connectés des moyens de déclenchement d'alarme 18 comportant un relais dont on a représenté la bobine 19 et le contact 20 qui, par sa fermeture éventuelle, permet de commander une alarme.

En se reportant maintenant aux figures 3 à 6, la sonde 4 se compose tout d'abord d'une première partie cylindrique 21 et d'une seconde partie cylindrique 22 de diamètre plus grand. Sur la figure 3, la seconde partie cylindrique 22 se prolonge par une troisième partie cylindrique 23 se terminant par une calotte sphérique 24. Sur la figure 4, la seconde partie cylindrique 22 se prolonge par une troisième partie cylindrique 25 dont la base est une surface plane 26 perpendiculaire à l'axe de la sonde 4. Sur la figure 5, la seconde partie cylindrique 22 se prolonge par une troisième partie cylindrique 27 se terminant par un cône 28.

Les trois formes de sonde décrites précédemment sont particulièrement appropriées pour des sondes destinées à être montées sur un coude de la conduite 2 en étant disposées sensiblement parallèlement à l'axe de la conduite, de manière telle que l'extrémité libre des sondes soit exposée au flux des particules à détecter. Plus précisément, chacune de ces trois sondes peut être placées soit dans le bas d'une coude raccordant une conduite verticale descendante avec une conduite horizontale soit dans le haut d'un coude raccordant une conduite verticale ascendante avec une conduite horizontale, l'extrémité libre (24, 26 ou 28) de la sonde 4 étant dirigée face au flux vertical des particules entraînées dans la conduite.

Sur la figure 6, la seconde partie cylindrique 22 de la sonde 4 se prolonge par une troisième partie cylindrique 29 dont la base est une surface plane 30 inclinée sensiblement à 45° par rapport à l'axe de la sonde 4. Cette forme de sonde est particulièrement appropriée pour une sonde destinée à être montée sur la génératrice extérieure d'une coude raccordant une conduite horizontale avec une conduite verticale descendante, en étant disposée perpendiculairement à l'axe de la conduite verticale descendante, en offrant la surface oblique 30 au flux des particules à détecter. Afin que la surface 30 de réception des particules soit correctement positionnée à l'intérieur de la conduite, la première partie cylindrique 21 de la sonde 4 comporte deux plats 31.

Enfin, on a représenté en traits mixtes sur les figures 3 à 6 la couche d'alumine qui recouvre la sonde 4. De plus, l'extrémité libre (24, 26, 28 ou 30) de la sonde 4 est élargie de façon à définir une surface de réception des particules suffisamment importante, tout en restant compatible en diamètre avec l'orifice de passage du bossage pratiqué sur la canalisation.

Le fonctionnement et la manière d'utiliser le dispositif de déclenchement d'alarme selon l'invention se déduisent de la description qui précède et seront expliqués dans ce qui suit.

Le générateur de tension 11 applique en permanence une faible tension sous grande impédance (afin d'éviter tout risque d'étincelle et pour se trouver ainsi en sécurité intrinsèque) entre la sonde 4 et la masse de la canalisation 2.

Lorsque la couche d'alumine 6 est perforée en au moins un point, le repère 32 sur la figure 1 illustrant une telle perforation, il s'écoule un courant par la sonde 4 perforée vers la masse à travers l'eau ruisselant sur la sonde. Dès lors, il se développe une tension aux bornes de la résistance 13 et on mesure cette tension au moyen de l'amplificateur différentiel à entrées flottantes 14. Cette tension est ensuite comparée à une tension de référence du seuil par l'amplificateur 16. Si cette tension de seuil est atteinte, l'amplificateur comparateur 16 donne une tension d'excitation de la bobine 19 d'un relais qui enclenche une alarme de nature quelconque par fermeture du contact électrique 20. Lorsque l'alarme retentit, ceci signifie que les vannes, les coudes des conduites, etc. ... peuvent commencer à être attaqués par le sable entrainé par le gaz.

De plus, lorsque la sonde 4 est érodée, on peut connaître la quantité de sable qui est passée dans la canalisation en comparant cette sonde à d'autres sondes érodées expérimentalement en laboratoire avec des quantités connues de sable de granulométrie déterminée, projetées à des vitesses connues dans un gaz de caractéristiques connues et semblables à celles qui règnent dans la conduite en exploitation.

Ce qui vent d'être décrit reste évidemment valable pour les sondes représentées sur les figures 3 à 6, le sable perforant la sonde au niveau de son extrémité libre (24, 26, 28 ou 30).

## Revendications

1. Dispositif de déclenchement d'alarme associé à une conduite dans laquelle circule un fluide (3), tel que par exemple du gaz naturel, entraînant avec lui des particules solides comme par exemple du sable, ainsi que de l'eau sous forme de gouttelettes ou de la boue, du type comprenant une sonde (4) plongeant à l'intérieur de ladite conduite (2) et dont une paroi est soumise à l'action érosive des particules solides, des moyens de détection (9) d'une perforation de ladite paroi, des moyens de déclenchement d'alarme (18) qui sont activés par lesdits moyens de détection si ladite perforation dépasse un degré prédéterminé, caractérisé en ce que ladite sonde (4) est un barreau réalisé dans un matériau conducteur de l'électricité et recouvert uniformément d'au moins une couche isolante (6) formant ladite paroi, et en ce que ledit moyen de détection comprend un circuit électronique de traitement (9) ayant une branche (10) connectée entre ledit barreau et la masse de ladite conduite (2), ladite branche (10) comportant un générateur de tension (11) et un circuit de mesure de courant (12).

2. Dispositif selon la revendication 1, caractérisé en ce que la couche isolante (6) précitée est formée par anodisation du matériau précité formant le barreau précité ou par schoopage.

3. Dispositif selon la revendication 1 ou 2, caractérisé en ce que le matériau précité formant le barreau précité est un alliage d'aluminium, et en ce que la couche isolante (6) précitée est de l'alumine.

4. Dispositif selon la revendication 3, caractérisé en ce que l'épaisseur de l'alumine précitée est, à l'état initial, d'environ 50 à 100 $\mu$.

5. Dispositif selon l'une des revendications précédentes, caractérisé en ce que le circuit de mesure de courant (12) précité comporte une résistance (13) connectée entre le barreau précité et le générateur de tension (11) précité, et un amplificateur différentiel (14) dont les deux entrées (D, E) sont connectées respectivement aux deux bornes de ladite résistance.

6. Dispositif selon la revendication 5, caractérisé en ce qu'un circuit comparateur de tension (15) est connecté à la sortie de l'amplificateur différential (14) précité et en ce que les moyens de déclenchement d'alarme (18) sont connectés à la sortie dudit circuit comparateur de tension.

7. Dispositif selon l'une des revendications précédentes, caractérisé en ce que, la sonde (4) précitée étant destinée de préférence à être montée sur un coude de la conduite (2) précitée en étant disposée sensiblement parallèlement à l'axe de ladite conduite, l'extrémité libre de ladite sonde est une calotte (24) sensiblement sphérique dirigée face au flux (A) des particules précitées.

8. Dispositif selon l'une des revendications 1 à 6, caractérisé en ce que, la sonde (4) précitée étant destinée de préférence à être montée sur un coude de la conduite (2) précitée en étant disposée sensiblement parallèlement à l'axe de ladite conduite, l'extrémité libre de ladite sonde a une surface plane (26) sensiblement perpendiculaire à l'axe de ladite sonde et dirigée face au flux des particules précitées.

9. Dispositif selon l'une des revendications 1 à 6, caractérisé en ce que, la sonde (4) précitée étant destinée de préférence à être montée sur un coude de la conduite (2) précitée en étant disposé sensiblement parallèlement à l'axe de ladite conduite, l'extrémité libre (27, 28) de ladite sonde est sensiblement conique et dirigée face au flux des particules précitées.

10. Dispositif selon l'une des revendications 1 à 6, caractérisé en ce que, la sonde (4) précitée étant destinée de préférence à être montée sur la génératrice extérieure d'une coude raccordant une conduite horizontale avec une conduite verticale descendante en étant disposée sensiblement perpendiculairement à l'axe de ladite conduite verticale descendante, l'extrémité libre de ladite sonde a une surface plane (30), inclinée sensiblement à 45° par rapport à l'axe de ladite sonde, et exposée au flux des particules précitées à détecter.

11. Dispositif selon l'une des revendications 7 à 10, caractériseé en ce que l'extrémité libre précitée de la sonde (4) précitée est sensiblement élargie de façon à définir une surface de réception (24, 26, 28, 30) des particules précitées suffisamment importante.

**Patentansprüche**

1. Alarmauslösungsvorrichtung, welche einer Leitung, in welcher ein Feststoffteilchen wie z.B. Sand sowie Wasser in Form von Tröpchen oder Schlamm mitnehmendes fliessfähiges Mittel (3) wie z.B. Erdgas zugeordnet ist, derjenigen Bauart, die eine in das Innere der genannten Leitung (2) tauchende Sonde (4), deren Wandung der abtragenden Wirkung der Feststoffteilchen unterworfen ist, Fühlermittel (9) zur Feststellung einer Durchlöcherung der genannten Wandung, Alarmauslösungsmittel (18), die durch die genannten Fühlermittel wirksam werden, wenn die genannte Durchlöcherung ein vorbestimmtes Mass überschreitet, umfasst, dadurch gekennzeichnet, dass die genannte Sonde (4) ein aus einem elektrizitätsleitenden Werkstoff hergestellten und mit wenigstens einer die genannte Wandung bildenden Isolierschicht (6) gleichmässig überzogener Stab ist und dass das genannte Fühlermittel eine elektronische Verarbeitungsschaltung (9) mit einem zwischen dem genannten Stab und der Masse der genannten Leitung (2) eingeschalteten Zweig (10) umfasst, wobei der genannte Zweig (10) einen Spannungserzeuger (11) und eine Strommessschaltung (12) aufweist.

2. Vorrichtung nach Anspruch 1, dadurch gekennzeichnet, dass die genannte Isolierschicht (6) durch Anodisierung des den genannten Stab bildenden genannten Werkstoffs oder durch Flammspritzen hergestellt wird.

3. Vorrichtung nach Anspruch 1 oder 2, dadurch gekennzeichnet, dass der den genannten Werkstoff bildende genannte Stab eine Aluminiumlegierung ist und dass die genannte Isolierschicht (6) Aluminium-oxid ist.

4. Vorrichtung nach Anspruch 3, dadurch gekennzeichnet, dass die Stärke des genannten Aluminiumoxids im Anfangszustand ungefähr 50 bis 100 $\mu$ beträgt.

5. Vorrichtung nach einem der vorangehenden Ansprüche, dadurch gekennzeichnet, dass die genannte Strommessschaltung (12) einen zwischen dem genannten Stab und dem genannten Spannungserzeuger (11) geschalteten Widerstand (13) und einen Differenzialverstärker (14) dessen beide Eingänge (D, E) jeweils zwischen beiden Anschlussklemmen des genannten Widerstands geschaltet sind, umfasst.

6. Vorrichtung nach Anspruch 5, dadurch gekennzeichnet, dass eine Spannungsvergleichsschaltung (15) an dem Ausgang des genannten Differenzialverstärkers (14) angeschlossen ist und dass die Alarmauslösungsmittel (18) an dem Ausgang der genannten Spannungsvergleichsschaltung angeschlossen sind.

7. Vorrichtung nach einem der vorangehenden Ansprüche, dadurch gekennzeichnet, dass, da die genannte Sonde (4) dazu vorzugsweise bestimmt ist, en einer Krümmung der genannten Leitung (2), mit der Mittellinie der genannten Leitung etwa gleichgerichtet angeordnet angebracht zu werden, das freie Ende der genannten Sonde eine dem Fluss (A) der genannten Teilchen zugewandte im wesentlichen kugelförmige Kappe (24) ist.

8. Vorrichtung nach einem der Ansprüche 1 bis 6, dadurch gekennzeichnet, dass, da die genannte Sonde (4) dazu vorzugsweise bestimmt ist, an einer Krümmung der genannten Leitung (2), mit der Mittellinie der genannten Leitung etwa gleichgerichtet angeordnet angebracht zu werden, das freie Ende der genannten Sonde eine im wesentlichen senkrecht zur Mittellinie der genannten Sonde verlaufende und dem Fluss der genannten Teilchen zugewandte flache Fläche hat.

9. Vorrichtung nach einem der Ansprüche 1 bis 6, dadurch gekennzeichnet, dass, da die genannte Sonde (4) dazu vorzugsweise bestimmt ist, an einer Krümmung der genannten Leitung (2) mit der Mittellinie der genannten Leitung etwa gleichgerichtet angeordnet angebracht zu werden, das freie Ende (27, 28) der genannten Sonde im wesentlichen kegelförmig und dem Fluss der genannten Teilchen zugewandt ist.

10. Vorrichtung nach einem der Ansprüche 1 bis 6, dadurch gekennzeichnet, dass, da die genannte Sonde (4) dazu vorzugsweise bestimmt ist, an die äussere Erzeugende einer eine waagerechte Leitung mit einer senkrechten, abwärts gerichteten Leitung verbindenden Krümmung etwa senkrecht zur Mittellinie der genannten senkrechten abwärts gerichteten Leitung angeordnet angebracht zu werden, das freie Ende der genannten Sonde eine um etwa 45° in Bezug auf die Mittellinie der genannten Sonde geneigte und dem Fluss der aufzuspürenden genannten Teilchen ausgesetzte ebene Fläche (30) hat.

11. Vorrichtung nach einem der Ansprüche 7 bis 10, dadurch gekennzeichnet, dass das genannte freie Ende der genannten Sonde (4) im wesentlichem erweitert ist, um eine genügend grosse Auffangfläche (24, 26, 28, 30) für die genannten Teilchen zu bilden.

## Claims

1. Alarm release device associated with a duct in which is flowing a fluid (3) such for instance as natural gas carrying along with it solid particles such for instance as sand as well as water in the shape of droplets or mud, of the kind comprising a probe (4) extending into the inside of said duct (2) and one wall of which is subjected to the erosive action of solid particles, means (9) for detecting a perforation of said wall, alarm release means (18) which are activated by said detection means if said perforation exceeds a predetermined extent, characterized in that said probe (4) is a bar made from an electricity-conducting material and uniformly covered with at least one insulating layer (6) forming said wall and in that said detection means comprises an electronic processing circuit (9) having one branch (10) connected between said bar and the body of said duct (2), said branch (10) comprising a voltage generator (11) and a current measuring circuit (12).

2. Device according to claim 1, characterized in that said insulating layer (6) is provided through anodization of said material forming said bar or through a schoop process.

3. Device according to claim 1 or 2, characterized in that said material forming said bar is an aluminum alloy and in that said insulating layer (6) is alumina.

4. Device according to claim 3, characterized in that the thickness of said alumina is in the initial state of about 50 to 100 $\mu$.

5. Device according to one of the foregoing claims, characterized in that said current measuring circuit (12) comprises a resistor (13) connected between said bar and said voltage generator (11) and a differential amplifier (14) both inputs (D, E) of which are connected to both terminals of said resistor, respectively.

6. Device according to claim 5, characterized in that a voltage comparator circuit (15) is connected to the output of said differential amplifier (14) and in that the alarm release means (18) are connected to the output of said voltage comparator circuit.

7. Device according to one of the foregoing claims, characterized in that, said probe (4) being preferably adapted to be mounted on a bend of said duct (2) while being arranged in substantially parallel relation to the axis of said duct, the free end of said probe is a substantially spherical cap (24) directed to face the flux (A) of said particles.

8. Device according to one of claims 1 to 6, characterized in that, the said probe (4) being preferably adapted to be mounted on a bend of said duct (2) while being arranged in substantial parallel relation to the centre line of said duct, the free end of said probe has a flat surface (26) substantially perpendicular to the axis of said probe and directed to face the flux of said particles.

9. Device according to one of claims 1 to 6, characterized in that, said probe (4) being preferably adapted to be mounted on a bend of said duct (2) while being arranged in substantially parallel relation to the axis of said duct, the free end (27, 28) of said probe is substantially conical and directed to face the flux of said particles.

10. Device according to one of claims 1 to 6, characterized in that, said probe (4) being preferably adapted to be mounted onto the outer generatrix of a bend connecting a horizontal duct with a vertical downward extending duct while being arranged substantially perpendicular to the axis of said vertical downward extending duct, the free end of said probe has a flat surface (30) inclined substantially at 45° with respect to the axis of said probe and exposed to the flux of said particles to be detected.

11. Device according to one of claims 7 to 10, characterized in that said free end of said probe (4) is substantially enlarged so as to define a sufficiently great receiving surface (24, 26, 28, 30) for said particles.

*Fig. 1.*

*Fig. 2.*

Fig. 6.

Fig. 5.

Fig. 4.

Fig. 3.